(19) Europäisches Patentamt
European Patent Office
Office européen des brevets

(11) **EP 2 201 328 B1**

(12) **EUROPÄISCHE PATENTSCHRIFT**

(45) Veröffentlichungstag und Bekanntmachung des Hinweises auf die Patenterteilung:
**03.08.2011 Patentblatt 2011/31**

(21) Anmeldenummer: **08802034.2**

(22) Anmeldetag: **11.09.2008**

(51) Int Cl.:
**G01B 21/04** (2006.01)

(86) Internationale Anmeldenummer:
**PCT/EP2008/007474**

(87) Internationale Veröffentlichungsnummer:
**WO 2009/052901 (30.04.2009 Gazette 2009/18)**

(54) **VERFAHREN ZUM KORRIGIEREN DER MESSWERTE EINES KOORDINATENMESSGERÄTS UND KOORDINATENMESSGERÄT**

METHOD FOR CORRECTING THE MEASURED VALUES OF A COORDINATE MEASUREMENT DEVICE, AND COORDINATE MEASUREMENT DEVICE

PROCÉDÉ POUR CORRIGER LES VALEURS DE MESURE D'UN APPAREIL DE MESURE DE COORDONNÉES ET APPAREIL DE MESURE DE COORDONNÉES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.10.2007 DE 102007051054**

(43) Veröffentlichungstag der Anmeldung:
**30.06.2010 Patentblatt 2010/26**

(73) Patentinhaber: **Carl Zeiss Industrielle Messtechnik GmbH
73447 Oberkochen (DE)**

(72) Erfinder: **HELD, Tobias
86720 Nördlingen (DE)**

(74) Vertreter: **Witte, Weller & Partner
Phoenixbau
Königstrasse 5
70173 Stuttgart (DE)**

(56) Entgegenhaltungen:
**DE-A1- 4 436 507      DE-A1- 10 124 493
DE-A1- 19 518 268      DE-A1- 19 809 589
DE-A1-102004 007 968**

EP 2 201 328 B1

**Beschreibung**

Die Erfindung betrifft ein Verfahren zum Korrigieren von Messwerten eines Koordinatenmessgeräts, das einen Tastkopf, einen Kalibrierkörper, sowie eine Vorrichtung zum Aufnehmen und zum Korrigieren von vom Tastkopf aufgenommenen Messwerten in Abhängigkeit von vorab ermittelten Verformungsparametern von Elementen des Koordinatenmessgeräts aufweist.

Die Erfindung betrifft ferner ein Verfahren zum Korrigieren von Messwerten eines Koordinatenmessgeräts, das einen Tastkopf sowie eine Vorrichtung zum Aufnehmen und zum Korrigieren von vom Tastkopf an einem Werkstück aufgenommenen Messwerten in Abhängigkeit von vorab ermittelten Verformungsparametern aufweist.

Die Erfindung betrifft schließlich ein Koordinatenmessgerät, das einen Tastkopf sowie eine Vorrichtung zum Aufnehmen und zum Korrigieren von vom Tastkopf aufgenommenen Messwerten in Abhängigkeit von vorab ermittelten Verformungsparametern aufweist

Verfahren der vorstehend genannten Art sind aus der DE 101 24 493 A1 bekannt.

Bei Koordinaten-Messgeräten, die typischerweise zum Vermessen der Oberfläche von Werkstücken eingesetzt werden, treten systematische Fehler dadurch auf, dass die Elemente des Koordinatenmessgeräts sich während der Messung verbiegen. Hier ist in erster Linie die Verbiegung des Tastkopfes, insbesondere des Taststiftes zu nennen, aber auch die Verbiegung von strukturellen Komponenten des Koordinatenmessgeräts. Derartige Verbiegungen haben im Bereich des Tastkopfes und des Taststiftes ihre wesentliche Ursache durch die aufgebrachte Antastkraft. Es spielen jedoch auch Kräfte eine Rolle, die beim Beschleunigen und Abbremsen der bewegten Elemente des Koordinatenmessgeräts in Verbindung mit deren Masse auftreten.

Eine Verbiegung eines an der Messung beteiligten Elements des Koordinatenmessgeräts führt naturgemäß zu Messfehlern. Man hat daher bereits auf verschiedenste Weise versucht, derartige Messfehler durch Korrekturverfahren zu kompensieren.

Aus der DE 101 24 493 A1 ist es bekannt, das dynamische Biegeverhalten eines Tasters als Parameterfeld, insbesondere als Tensor, zu bestimmen, Korrekturwerte aus diesem Parameterfeld unter Berücksichtigung der auf den Taster einwirkenden Beschleunigung zu berechnen und schließlich die Messergebnisse des Tasters mit den Korrekturwerten zu korrigieren.

Aus DE 195 28 268 A1 ist es bekannt, das elastische Biegeverhalten des Koordinatenmessgerätes aufgrund der Messkraft und der Stellung der Messschlitten im Messvolumen zu ermitteln und daraus Korrekturwerte zu berechnen, mit deren Hilfe die Messfehler aufgrund der Maschinenbiegungen kompensiert werden können.

Aus DE 44 36 507 A1 ist ein weiteres Verfahren bekannt, bei dem Messwerte eines Koordinatenmessgerätes mit gespeicherten Korrekturwerten verrechnet werden, wobei die Korrekturwerte das elastische Biegeverhalten des Koordinatenmessgerätes beschreiben.

Aus DE 10 2004 007 968 A1 ist ein Verfahren zum Antasten eines Werkstücks mit einem Koordinatenmessgerät bekannt, wobei die Kontaktkraft zunächst erhöht und dann wieder verringert wird (oder umgekehrt). Aus den jeweils gemessenen Koordinatenwerten wird anschließend ein Koordinatenwert der Oberfläche des angetasteten Werkstücks errechnet.

Es ist ferner bei Koordinatenmessgeräten bekannt, die Position der am freien Ende der Tastspitze des Tastkopfs angeordneten Tastkugel im Raum anhand von so genannten Kalibrierkörpern zu kalibrieren. Üblicherweise sind diese Kalibrierkörper als Kugeln ausgebildet, die im Messbereich des Koordinatenmessgeräts angeordnet sind und von der Tastkugel unter nahezu beliebigen Winkeln angefahren werden können. Im Rahmen der vorliegenden Erfindung wird der Kalibrierkörper als Element des Koordinatenmessgeräts betrachtet.

Aus der DE 198 09 589 A1 ist es bekannt, einen Kalibrierkörper, insbesondere eine Kalibrierkugel, mit dem Tastkopf anzufahren und die Tastkugel entlang einer Bahn auf der Oberfläche des Kalibrierkörpers zu führen, die nicht auf eine Ebene beschränkt ist. Aus den dabei aufgenommenen Messwerten werden dann die dem Taster zugeordneten Kalibrierdaten berechnet.

Im Rahmen der vorliegenden Erfindung ist nun festgestellt worden, dass beim Kalibrieren eines Tastkopfes durch die üblichen Antastkräfte auch die Kalibrierkörper und deren Halterungen in nicht mehr vernachlässigbarem Umfang verformt werden. Diese Verformungen sind bislang nicht berücksichtigt worden. Sie pflanzen sich jedoch als Fehler in allen weiteren Messungen fort, die mit dem vermeintlich kalibrierten Tastkopf ausgeführt werden.

Weiterhin ist bei bekannten Verfahren von Nachteil, dass Fehler auch durch die Nachgiebigkeit des zu vermessenden Werkstücks auftreten.

Der Erfindung liegt daher die Aufgabe zugrunde, Verfahren und ein Koordinatenmessgerät der eingangs genannten Art dahingehend weiterzubilden, dass diese Nachteile vermieden werden. Insbesondere sollen Verfahren und ein Koordinatenmessgerät bereitgestellt werden, bei denen auch die Verformung des Kalibrierkörpers und dessen Halterung sowie alternativ oder zusätzlich die Verformung des Werkstücks in den Messwerten berücksichtigt und damit korrigiert werden.

Bei dem eingangs als erstes genannten Verfahren wird diese Aufgabe erfindungsgemäß gelöst, durch die Schritte:

a) Ermitteln der mechanischen Nachgiebigkeit des Kalibrierkörpers an vorbestimmten Punkten der Oberfläche des Kalibrierkörpers;

b) Abspeichern der ermittelten Nachgiebigkeit in Form eines Datensatzes in der Vorrichtung;

c) Punktweises Abtasten des Kalibrierkörpers mittels des Tastkopfes; und

d) Kalibrieren des Tastkopfes durch Korrigieren der in Schritt c) ermittelten Messwerte des Tastkopfes mit dem Datensatz (N).

Bei dem eingangs als zweites genannten Verfahren wird diese Aufgabe erfindungsgemäß gelöst, durch die Schritte:

a) Ermitteln der mechanischen Nachgiebigkeit des Werkstücks an vorbestimmten Punkten der Oberfläche des Werkstücks;

b) Abspeichern der ermittelten Nachgiebigkeit in Form eines Datensatzes in der Vorrichtung;

c) Punktweises Abtasten des Werkstücks mittels des Tastkopfes; und

d) Korrigieren der in Schritt c) ermittelten Messwerte des Tastkopfes mit dem Datensatz.

Bei dem eingangs genannten Koordinatenmessgerät wird diese Aufgabe erfindungsgemäß dadurch gelöst, dass die Vorrichtung eine Korrekturstufe mit einem ersten Eingang zum Zuführen eines Datensatzes, der eine Nachgiebigkeit von einem Kalibrierkörper oder einem Werkstück repräsentiert, und einen zweiten Eingang zum Zuführen von Messwerten des Tastkopfes aufweist, wobei die Korrekturstufe dazu ausgebildet ist, unter Verwendung des Datensatzes korrigierte Messwerte an einem Ausgang bereitzustellen.

Die der Erfindung zugrunde liegende Aufgabe wird auf diese Weise vollkommen gelöst.

Mit der Erfindung im Umfang des als erstes genannten Verfahrens ist es nämlich erstmals möglich, die genannten Fehler zu kompensieren, die durch eine Verformung des Kalibrierkörpers auftreten. Bei dem als zweites genannten Verfahren wird eine Korrektur bzw. Kalibrierung bei bekannter Nachgiebigkeit des Werkstücks ermöglicht, so dass auch diese Nachgiebigkeit nicht zu Messfehlern führt.

Bei einer bevorzugten Ausgestaltung der Erfindung wird als Kalibrierkörper eine Kalibrierkugel verwendet.

Diese Maßnahme hat den Vorteil, dass auf bekannte Kalibrierkonzepte zurückgegriffen werden kann.

In Schritt a) kann die Nachgiebigkeit in vorteilhafter Weise alternativ durch Messung an einem Muster-Kalibrierkörper oder durch die Finite-Elemente-Methode (FEM) an einem Kalibrierkörper-Modell ermittelt werden.

Ferner ist bevorzugt, wenn in Schritt d) die ermittelte Nachgiebigkeit in einem Punkt mit der gemessenen Messkraft verrechnet wird und insbesondere nach Schritt d) mit dem Tastkopf die Oberfläche eines Werkstücks vermessen und dann die verrechnete Nachgiebigkeit von dem beim Vermessen des Werkstücks ermittelten Messwert abgezogen wird.

Diese Maßnahmen hab en den Vorteil, dass die Korrektur in einfacher Weise vorgenommen werden kann.

Eine besonders einfache Korrektur ergibt sich ferner dann, wenn in Schritt b) der Datensatz in Form einer Matrix abgespeichert wird.

Schließlich wird eine gute Wirkung dann erzielt, wenn der Kalibrierkörper im Zentrum eines vorgesehenen räumlichen Messbereichs angeordnet wird.

Die von der Messkraft abhängigen Verformungen der Komponenten des Koordinatenmessgeräts erreichen in diesem räumlichen Bereich etwa ihre Mittelwerte. Die genannte Maßnahme hat daher den Vorteil, dass diese Verformungen beim Kalibrieren mit berücksichtigt werden. Beispielsweise fließen diese bei einer Kalibrierung der Taststiftnachgiebigkeit in die Verformungsparameter des Taststifts mit ein und können so beim Messen teilweise kompensiert werden. Ohne Korrektur der Nachgiebigkeit des Kalibrierkörpers wurde bisher hingegen versucht, den Kalibrierkörper möglichst kurz und damit am Rande des Messbereichs aufzuspannen.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Figur 1 eine äußerst schematisierte, perspektivische Ansicht eines Koordina- tenmessgeräts nach dem Stand der Technik;

Figur 2: in vergrößertem Maßstab eine Seitenansicht einer Kalibrierung zur Erläuterung des erfindungsgemäßen Verfahrens; und

Figur 3 eine Ansicht einer Kalibrierkugel mit Messpunkten, wie sie im Rahmen des erfindungsgemäßen Verfahrens verwendet werden.

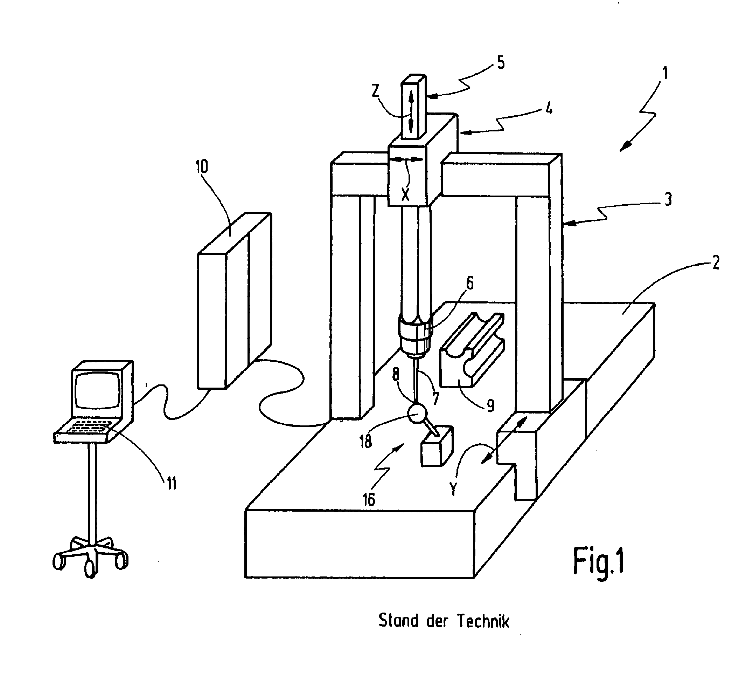

In Figur 1 bezeichnet 1 als ganzes ein Koordinatenmessgerät in bekannter Portalbauweise. Das Koordinatenmessgerät 1 weist einen Messtisch 2 auf, an dem ein Portal 3 in horizontaler Richtung entlang der so genannten y-Achse verfahrbar ist. An einem Querbalken des Portals 3 läuft ein Pinolenträger in horizontaler Richtung entlang der so genannten x-Achse. In dem Pinolenträger 4 wiederum läuft eine Pinole 5 in vertikaler Richtung, der so genannten Z-Achse. Die Achsen x, y und z bilden ein kartesisches Koordinatensystem.

Am unteren Ende der Pinole 5 befindet sich ein Tastkopf 6, der in einen Taststift 7 ausläuft, an dessen freiem Ende sich eine Tastkugel 8 befindet.

Der Tastkopf 6 bzw. der Taststift 7 erstrecken sich in Figur 1 senkrecht nach unten. Der Tastkopf 6 kann üblicherweise mit einem Drehgelenk versehen sein, so dass er bzw. der Taststift 7 auch zur Vertikalen geneigt und/oder um die Vertikale gedreht werden kann. Auf diese Weise ist es möglich, durch Verfahren des Portals 3, des Pinolenträgers 4 und der Pinole 5 sowie durch Neigen und Drehen des Taststiftes 7 jeden beliebigen Punkt an einem Werkstück 9, das in einem vorgegebenen Messraum oberhalb des Messtisches 2 aufgespannt ist, aus nahezu jeder beliebigen Richtung anzufahren.

Die vom Tastkopf 6 ermittelten Messwerte, d.h. die räumlichen Koordinaten eines Messpunktes an dem Werkstück 9 werden zu einer Steuerungs-, Mess- und Auswerteeinheit 10 übermittelt, die ihrerseits von einem Benutzer über einen Mess- und Auswerterechner mit einem Steuergerät 11 steuerbar ist.

Auf dem Messtisch 2 befindet sich, vorzugsweise im Zentrum des Messbereichs, noch eine Kalibriervorrichtung 16, die im Rahmen der vorliegenden Erfindung als Element des Koordinatenmessgeräts 1 betrachtet wird, auch wenn sie lösbar mit diesem verbunden ist.

Die Kalibriervorrichtung 16 enthält einen Kalibrierkörper definierter Form, insbesondere eine Kalibrierkugel 18. Da deren Position innerhalb des Messbereichs bekannt ist, kann der Tastkopf 6 kalibriert werden. Dies geschieht, indem die Tastkugel 8 gegen einen definierten Punkt auf der Oberfläche der Kalibrierkugel 18 gefahren und die dabei gemessenen Raumkoordinaten dieses Punktes mit den bekannten, tatsächlichen Raumkoordinaten des Punktes verglichen werden. Eine sich dabei ergebende Differenz wird bei nachfolgenden Messungen am Werkstück 9 berücksichtigt.

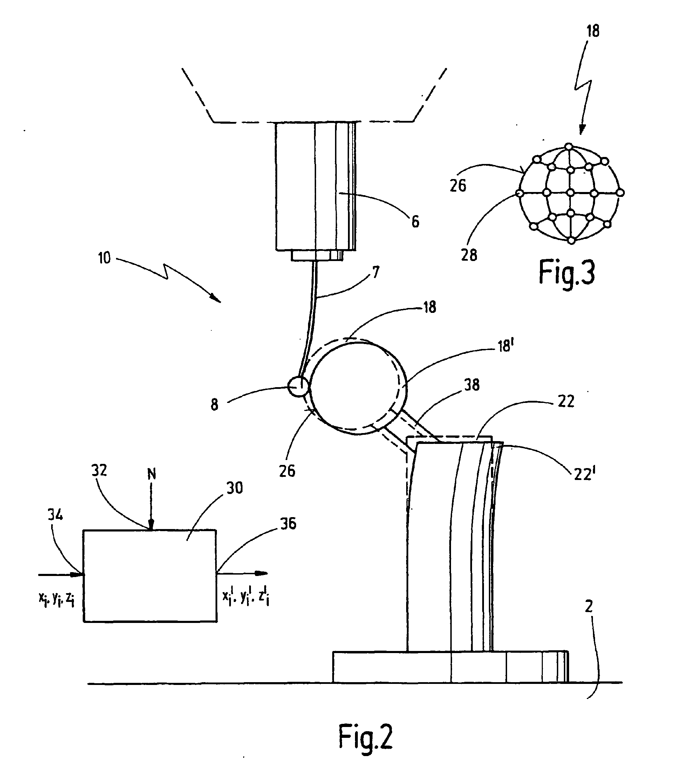

Figur 2 zeigt den Antastvorgang an der Kalibrierkugel 18 in vergrößertem Maßstab. Wie man aus der (übertrieben dargestellten) Situation erkennen kann, hat sich der Taststift nach links verbogen und zugleich wurde die Kalibrierkugel von ihrer gestrichelt gezeichneten Ausgangsstellung 18 in eine beabstandete Stellung 18' verbogen. Dabei wurde gleichzeitig auch eine Halterung der Kalibrierkugel von 22 nach 22' verbogen. Ferner kann durch die Anlage der Tastkugel 8 auch eine Oberfläche 26 der Kalibrierkugel 18 verformt werden. Diese Vorgänge werden im Rahmen der vorliegenden Erfindung gesamthaft als "Nachgiebigkeit" bezeichnet.

Wie man leicht sieht, lassen sich die Vorgänge der messkraftabhängigen Verbiegung des Tastkopfs 6, insbesondere des Taststifts 7, nicht von der Verformung der Halterung 22 der Kalibrierkugel 18 und der Kalibrierkugel selbst trennen. Wenn man also nach dem Stand der Technik vorgeht und diese Verformung ignoriert, dann würde ein ermittelter Tensor nicht nur die Verformung des Taststifts 7 beinhalten sondern auch die der Kalibrierkugel 18 und dann an realen, in der Regel steifen Werkstücken falsch messen.

Erfindungsgemäß wird nun die oben definierte Nachgiebigkeit zunächst in einem ersten Schritt ermittelt. Dies kann durch einen Laborversuch anhand eines realen Musters der Kalibrierkugel 18 und deren Halterung 22 geschehen. Alternativ kann die Nachgiebigkeit aber auch mittels der Finite-Elemente-Methode (FEM) anhand eines entsprechenden Modells berechnet werden.

Die Nachgiebigkeit wird auf der Oberfläche 26 der Kalibrierkugel 18 an einer Mehrzahl von Punkten 28 ermittelt. Diese Punkte sind vorzugsweise, wie Figur 2 beispielhaft zeigt, gleichförmig über die Oberfläche 26 verteilt. Die Anzahl der Punkte 28 kann je nach der Größe der Kalibrierkugel 28 und je nach gewünschter Genauigkeit in weiten Bereichen festgelegt werden.

Die so ermittelte Nachgiebigkeit wird nun in einem zweiten Schritt als Datensatz abgespeichert. Dies geschieht vorzugsweise in Form einer Matrix.

Wenn beispielsweise im Laborversuch oder durch FE-Berechnung in einem vorgegebenen Punkt 28i eine Nachgiebigkeit in x- und y- Richtung von 0,001mm/N und in z-Richtung von 0,0002 mm/N ermittelt wurde, dann ergibt sich für die Nachgiebigkeit folgende Matrix:

$$N = \begin{pmatrix} 0,001 & 0,0 & 0,0 \\ 0,0 & 0,001 & 0,0 \\ 0,0 & 0,0 & 0,0002 \end{pmatrix}.$$

Zur Ermittlung eines Korrekturwertes $\underline{k'}$ (x'i, y'i, z'i) wird für jeden Punkt 28 auf der Oberfläche 26 diese Matrix $\underline{N}$ mit dem Kraftvektor f multipliziert und das Ergebnis von den vom Tastkopf 6 gemessenen Messwerten $\underline{k}$ (xi, yi, zi) abgezogen:

$$\underline{k'} = \underline{k} - \underline{N} \cdot f$$

Die auf diese Weise korrigierten Messwerte erlauben die Bestimmung der Steifigkeit des Tastkopfes 6.

Dies ist in Figur 2 durch eine Korrekturstufe 30 angedeutet. Der Korrekturstufe 30 wird an einem ersten Eingang 32 die Matrix N zugeführt. An einem zweiten Eingang 34 liegen die Messwerte xi, yi, und zi des Tastkopfes 6 an. An einem Ausgang 36 der Korrekturstufe 30 sind dann die korrigierten Messwerte xi', yi' und zi' abnehmbar. Der Kraftvektor kann dabei je nach verwendetem Sensor im Tastkopfsystem aus unterschiedlichen Werten ermittelt werden: Bei Tastköpfen mit aktivem Messkraftgenerator kann der Kraftvektor aus den Parametern dieser Generatoren ermittelt werden. Beispielsweise bei Messkraftspulen aus den an diesen Spulen anliegenden Spannungen. Die am Eingang 34 der Korrekturstufe 30 anliegenden Messwerte können in diesem Fall direkt Kraftwerte darstellen.

Bei Tastköpfen ohne derartige Aktoren gibt es in der Regel Federelemente mit für diese Zwecke hinreichend bekannter Nachgiebigkeit. Die Messkraft kann dabei aus der Sensorauslenkung und dieser bekannten Nachgiebigkeit berechnet werden. Die am Eingang 34 der Korrekturstufe 30 anliegenden Messwerte können in diesem Falle Sensorauslenkungen darstellen. Die Korrekturstufe 30 beinhaltet in diesem Falle die Berechnung des Kraftvektors aus den Auslenkungen.

Alternativ kann auch die Korrekturstufe 30 um einen weiteren Eingang für den Kraftvektor ergänzt werden.

Als weitere Alternative kann zur Bestimmung der Nachgiebigkeit auch mit finiten, elastischen Elementen gearbeitet werden (nicht dargestellt), die jeweils am unteren Ende der Kalibrierkugel 18 und an einem die Kalibrierkugel 18 tragenden Schaft 38 angebracht sind. Die Elemente haben dabei einen translatorischen bzw. rotatorischen Freiheitsgrad. Aus den Messkräften und aus der Lage des jeweiligen Punktes 28 können dann Momente um diese finiten elastischen Elemente berechnet werden. Dabei kann jeder Knoten durch Nachgiebigkeitswerte für eine Verkippung durch das wirksame Moment und für eine Verschiebung durch die wirksame Kraft beschrieben werden.

Mit einem entsprechenden Verfahren, das ebenfalls Gegenstand der vorliegenden Erfindung ist, kann man auch bei bekannter Nachgiebigkeit des Werkstücks 9 während der eigentlichen Messung deren Verformung korrigieren.

Dies geschieht, indem zunächst die mechanischen Nachgiebigkeit an vorbestimmten Punkten der Oberfläche des Werkstücks 9 ermittelt wird. Dann wird die ermittelte Nachgiebigkeit in Form eines Datensatzes abgespeichert. Beim Vermessen des Werkstücks 9 wird dieses punktweise mittels des Tastkopfs 6 abgetastet und die ermittelten Messwerte des Tastkopfs 6 werden mit dem Datensatz N korrigiert.

**Patentansprüche**

1. Verfahren zum Korrigieren von Messwerten eines Koordinatenmessgeräts (1), das einen Tastkopf (6), einen Kalibrierkörper (18, 22), sowie eine Vorrichtung (10, 11, 30) zum Aufnehmen und zum Korrigieren von vom Tastkopf (6) aufgenommenen Messwerten $(x_i, y_i, z_i)$ in Abhängigkeit von vorab ermittelten Verformungsparametern von Elementen des Koordinatenmessgeräts aufweist, **gekennzeichnet durch** die Schritte:

   a) Ermitteln der mechanischen Nachgiebigkeit des Kalibrierkörpers (18, 22) an vorbestimmten Punkten (28) der Oberfläche (26) des Kalibrierkörpers (18, 22);
   b) Abspeichern der ermittelten Nachgiebigkeit in Form eines Datensatzes (N) in der Vorrichtung;
   c) Punktweises Abtasten des Kalibrierkörpers (18, 22) mittels des Tastkopfes (6); und

d) Kalibrieren des Tastkopfes (6) **durch** Korrigieren der in Schritt c) ermittelten Messwerte des Tastkopfes (6) mit dem Datensatz (N).

2. Verfahren nach Anspruch 1, **dadurch gekennzeichnet, dass** als Kalibrierkörper eine Kalibrierkugel (18) verwendet wird.

3. Verfahren nach Anspruch 1 oder 2, **dadurch gekennzeichnet, dass** in Schritt a) die Nachgiebigkeit durch Messung an einem Muster-Kalibrierkörper ermittelt wird.

4. Verfahren nach Anspruch 1 oder 2, **dadurch gekennzeichnet, dass** in Schritt a) die Nachgiebigkeit durch die Finite-Elemente-Methode an einem Kalibrierkörper-Modell ermittelt wird.

5. Verfahren nach einem oder mehreren der Ansprüche 1 bis 4, **dadurch gekennzeichnet, dass** in Schritt d) die ermittelte Nachgiebigkeit in einem Punkt (28) mit der gemessenen Messkraft verrechnet wird.

6. Verfahren nach Ansprüche 4, **dadurch gekennzeichnet, dass** nach Schritt d) mit dem Tastkopf (6) die Oberfläche eines Werkstücks (9) vermessen und dann die verrechnete Nachgiebigkeit von dem beim Vermessen des Werkstücks (9) ermittelten Messwert abgezogen wird.

7. Verfahren nach einem oder mehreren der Ansprüche 1 bis 6, **dadurch gekennzeichnet, dass** in Schritt b) der Datensatz in Form einer Matrix abgespeichert wird.

8. Verfahren nach einem oder mehreren der Ansprüche 1 bis 7, **dadurch gekennzeichnet, dass** der Kalibrierkörper im Zentrum eines vorgesehenen räumlichen Messbereichs angeordnet wird.

9. Verfahren zum Korrigieren von Messwerten eines Koordinatenmessgeräts, das einen Tastkopf (6) sowie eine Vorrichtung (10, 11, 30) zum Aufnehmen und zum Korrigieren von vom Tastkopf (6) an einem Werkstück (9) aufgenommenen Messwerten ($x_i$, $y_i$, $z_i$) in Abhängigkeit von vorab ermittelten Verformungsparametern aufweist, **gekennzeichnet durch** die Schritte:

   a) Ermitteln der mechanischen Nachgiebigkeit des Werkstücks (9) an vorbestimmten Punkten der Oberfläche des Werkstücks (9);
   b) Abspeichern der ermittelten Nachgiebigkeit in Form eines Datensatzes (N) in der Vorrichtung;
   c) Punktweises Abtasten des Werkstücks (9) mittels des Tastkopfes (6); und
   d) Korrigieren der in Schritt c) ermittelten Messwerte des Tastkopfes (6) mit dem Datensatz (N).

10. Koordinatenmessgerät, das einen Tastkopf (6) sowie eine Vorrichtung (10, 11, 30) zum Aufnehmen und zum Korrigieren von vom Tastkopf (6) aufgenommenen Messwerten ($x_i$, $y_i$, $z_i$) in Abhängigkeit von vorab ermittelten Verformungsparametern aufweist, **gekennzeichnet durch** eine Korrekturstufe (30) mit einem ersten Eingang (32) zum Zuführen eines Datensatzes (N), der eine Nachgiebigkeit von einem Kalibrierkörper (18, 22) oder einem Werkstück (9) repräsentiert, und mit einem zweiten Eingang (34) zum Zuführen von Messwerten ($x_i$, $y_i$, $z_i$) des Tastkopfes (6), wobei die Korrekturstufe (30) dazu ausgebildet ist, unter Verwendung des Datensatzes (N) korrigierte Messwerte ($x_i'$, $y_i'$, $z_i'$) an einem Ausgang (36) bereitzustellen.

**Claims**

1. A method for correcting measured values of a coordinate measuring machine (1) which has a probe head (6), a calibrating body (18, 22) and an apparatus (10, 11, 30) for recording and correcting measured values (xi, yi, zi), recorded by the probe head (6), on the basis of predetermined deformation parameters of elements of the coordinate measuring machine, **characterized by** the steps of:

   a) determining a mechanical flexibility of the calibrating body (18, 22) at predetermined points (28) on the surface (26) of the calibrating body (18, 22);
   b) storing the determined flexibility in the apparatus in the form of a data record (N);
   c) scanning the calibrating body (18, 22) point by point by means of the probe head (6); and
   d) calibrating the probe head (6) by correcting the measured values of the probe head (6), which were determined in step c), using the data record (N).

**2.** The method of claim 1, **characterized in that** a calibrating sphere (18) is used as the calibrating body.

**3.** The method of claim 1 or 2, **characterized in that** in step a), the flexibility is determined by measurement on a standard calibrating body.

**4.** The method of claim 1 or 2, **characterized in that** in step a), the flexibility is determined by a finite element method on a reference calibrating body model.

**5.** The method of one or more of claims 1 to 4, **characterized in that** in step d), the determined flexibility at a point (28) is computed together with the measured measurement force.

**6.** The method of claim 4, **characterized in that** after step d), the surface of a workpiece (9) is analyzed using the probe head (6) and then the calculated flexibility is subtracted from the measured value determined when analyzing the workpiece (9).

**7.** The method of one or more of claims 1 to 6, **characterized in that** in step b), the data record is stored in the form of a matrix.

**8.** The method of one or more of claims 1 to 7, **characterized in that** the calibrating body is arranged at the center of a defined spatial measurement range.

**9.** A method for correcting measured values of a coordinate measuring machine, which has a probe head (6) and an apparatus (10, 11, 30) for recording and correcting measured values ($x_i$, $y_i$, $z_i$), recorded by the probe head (6) on a workpiece (9), on the basis of predetermined deformation parameters, **characterized by** the steps of:

a) determining a mechanical flexibility of the workpiece (9) at predetermined points on the surface of the workpiece (9);
b) storing the determined flexibility in the apparatus in the form of a data record (N);
c) scanning the workpiece (9) point by point by means of the probe head (6); and
d) correcting the measured values of the probe head (6), which were determined in step c), using the data record (N).

**10.** A coordinate measuring machine comprising a probe head (6) and an apparatus (10, 11, 30) for recording and correcting measured values (x;, yi, zi), recorded by the probe head (6), on the basis of predetermined deformation parameters, **characterized by** a correction stage (30) having a first input (32) for supplying a data record (N) which represents a flexibility of a calibrating body (18, 22) or of a workpiece (9), and having a second input (34) for supplying measured values ($x_i$, $y_i$, $z_i$) of the probe head (6), wherein the correction stage (30) is configured to provide corrected measured values ($x_i'$, $y_i'$, $z_i'$) at an output (36) using the data record (N).

**Revendications**

**1.** Procédé de correction des valeurs de mesure d'un appareil (1) de mesure de coordonnées qui présente une tête palpeuse (6), un corps d'étalonnage (18, 22) ainsi qu'un dispositif (10, 11, 30) d'enregistrement et de correction des valeurs de mesure ($x_i$, $y_i$, $z_i$) enregistrées par la tête palpeuse (6) en fonction de paramètres de déformation, préalablement déterminés, d'éléments de l'appareil de mesure de coordonnées,
le procédé étant **caractérisé par** les étapes qui consistent à :

a) déterminer la déformabilité mécanique du corps d'étalonnage (18, 22) en des points (28) prédéterminés de la surface (26) du corps d'étalonnage (18, 22),
b) conserver en mémoire dans le dispositif la déformabilité ainsi déterminée sous la forme d'un jeu de données (N),
c) palper point par point le corps d'étalonnage (18, 22) au moyen de la tête palpeuse (6) et
d) à l'aide du jeu de données (N), étalonner la tête palpeuse (6) par correction des valeurs de mesure, déterminées à l'étape c), de la tête palpeuse (6).

**2.** Procédé selon la revendication 1, **caractérisé en ce qu'**il utilise comme corps d'étalonnage une bille d'étalonnage (18).

**3.** Procédé selon la revendication 1 ou 2, **caractérisé en ce que** dans l'étape a), la déformabilité est déterminée par mesure d'un corps d'étalonnage modèle.

**4.** Procédé selon la revendication 1 ou 2, **caractérisé en ce qu'**à l'étape a), la déformabilité est déterminée par la méthode des éléments finis sur un modèle de corps d'étalonnage.

**5.** Procédé selon l'une ou plusieurs des revendications 1 à 4, **caractérisé en ce qu'**à l'étape d), la déformabilité déterminée en un point (28) est calculée sur base de la force mesurée lors de la mesure.

**6.** Procédé selon la revendication 4, **caractérisé en ce qu'**après l'étape d), la surface d'une pièce (9) est mesurée avec la tête palpeuse (6) et la déformabilité calculée est ensuite déduite de la valeur de mesure déterminée lors de la mesure de la pièce (9).

**7.** Procédé selon l'une ou plusieurs des revendications 1 à 6, **caractérisé en ce qu'**à l'étape b), le jeu de données est conservé en mémoire sous la forme d'une matrice.

**8.** Procédé selon l'une ou plusieurs des revendications 1 à 7, **caractérisé en ce que** le corps d'étalonnage est disposé au centre d'une plage spatiale prévue pour la mesure.

**9.** Procédé de correction des valeurs de mesure d'un appareil de mesure de coordonnées qui présente une tête palpeuse (6) ainsi qu'un dispositif (10, 11, 30) qui enregistre et corrige en fonction de paramètres, préalablement déterminés sur des éléments de l'appareil de mesure de coordonnées, de déformation des valeurs de mesure ($x_i$, $y_i$, $z_i$) enregistrées par la tête palpeuse (6) sur une pièce (9),
le procédé étant **caractérisé par** les étapes qui consistent à :

a) déterminer la déformabilité mécanique de la pièce (9) en des points prédéterminés de la surface de la pièce (9),
b) conserver en mémoire dans le dispositif la déformabilité ainsi déterminée sous la forme d'un jeu de données (N),
c) palper point par point la pièce (9) au moyen de la tête palpeuse (6) et
d) à l'aide du jeu de données (N), corriger les valeurs de mesure de la tête palpeuse (6) déterminées à l'étape c).

**10.** Appareil de mesure de coordonnées qui présente une tête palpeuse (6) ainsi qu'un dispositif (10, 11, 30) d'enregistrement et de correction de valeurs de mesure (xi, yi, zi) enregistrées par la tête palpeuse (6) en fonction de paramètres de déformation déterminés préalablement,
**caractérisé par**
un étage de correction (30) qui présente une première entrée (32) à laquelle est amené un jeu de données (N) qui représente la déformabilité d'un corps d'étalonnage (18, 22) ou d'une pièce (9) et une deuxième entrée (34) à laquelle sont amenées des valeurs de mesure ($x_i$, $y_i$, $z_i$) de la tête palpeuse (6), l'étage de correction (30) étant configuré pour délivrer à une sortie (36) des valeurs de mesure ($x_i$, $y_i$, $z_i$) corrigées par recours au jeu de données (N).

Fig.1

Stand der Technik

Fig.3

Fig.2

**EP 2 201 328 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10124493 A1
- DE 19528268 A1
- DE 4436507 A1
- DE 102004007968 A1
- DE 19809589 A1